(19) Europäisches Patentamt
European Patent Office
Office européen des brevets

(11) **EP 2 550 442 B1**

(12) **EUROPEAN PATENT SPECIFICATION**

(45) Date of publication and mention
of the grant of the patent:
**25.10.2017 Bulletin 2017/43**

(21) Application number: **11759792.2**

(22) Date of filing: **18.03.2011**

(51) Int Cl.:
*F02D 41/18* (2006.01)    *F02M 99/00* (2006.01)
*F01N 3/20* (2006.01)    *F01N 11/00* (2006.01)
*F02D 41/24* (2006.01)    *F02D 41/02* (2006.01)
*F02D 41/14* (2006.01)    *F02D 41/40* (2006.01)

(86) International application number:
**PCT/SE2011/050299**

(87) International publication number:
**WO 2011/119090 (29.09.2011 Gazette 2011/39)**

(54) **METHOD FOR ADAPTION OF A MASS FLOW SENSOR**

VERFAHREN ZUR ANPASSUNG EINES MASSEFLUSSSENSORS

PROCÉDÉ D'ADAPTATION D'UN CAPTEUR DE DÉBIT MASSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2010 SE 1050268**

(43) Date of publication of application:
**30.01.2013 Bulletin 2013/05**

(73) Proprietor: **Scania CV AB (publ)**
**151 87 Södertälje (SE)**

(72) Inventors:
• **STENLÅÅS, Ola**
**S-151 48 Södertälje (SE)**
• **TELBORN, Klas**
**S-152 71 Södertälje (SE)**

(74) Representative: **Scania CV AB**
**Patents, GP 117kv**
**151 87 Södertälje (SE)**

(56) References cited:
**EP-A1- 1 793 109    DE-A1-102005 036 956**
**US-A1- 2006 005 821    US-A1- 2006 272 317**
**US-A1- 2008 148 811    US-A1- 2008 295 489**
**US-A1- 2009 126 346    US-A1- 2010 050 609**

**Description**

FIELD OF THE INVENTION AND PRIOR ART

The present invention relates to a method for adaptation of a mass flow sensor which is intended to measure the mass flow of air in an air intake to a combustion engine. The invention relates also to a computer program product comprising computer program code for implementing a method according to the invention, and to an electronic control unit.

To be able to control a combustion engine in an effective and environmentally friendly way it is important to be able to measure with good accuracy the mass flow of the air which flows into the engine's cylinders via its air intake. A correct value of this mass flow of air is required for achieving correct ratios between air and fuel in the engine's cylinders and hence good performance and low exhaust emissions. The mass flow of air is measured by means of a mass flow sensor situated in the air intake to the engine. A problem with such a mass flow sensor is that its output signals drift over time, and after even a short period of running of the engine the mass flow sensor may provide measured values which are subject to such large errors that performance and exhaust emissions are adversely affected. Compensating for this drift entails regular corrections of the output signals from the mass flow sensor so that the measured values from it concerning the mass flow of air in the air intake are caused to correspond better to the actual mass flow. In this description and the claims set out below, such correction is called "adaptation". The adaptation of the mass flow sensor may be done by comparing a measured value of the mass flow of air in the engine's air intake, determined by the mass flow sensor, with a corresponding calculation value determined on the basis inter alia of the engine's speed and volumetric efficiency, and by adapting the mass flow sensor according to the match between the measured value and the calculation value. The volumetric efficiency depends on the operating situation, and values for this efficiency are predetermined by the engine manufacturer for various operating situations. A problem with this known adaptation method is that the values of the volumetric efficiency are subject to errors which result in impaired adaptation of the mass flow sensor. If the engine is provided with a so-called EGR (exhaust gas recirculation) system for feeding back part of its exhaust gases to its air intake, this feedback has temporarily to be interrupted if the aforesaid calculation value is to be correct. Applying this known adaptation method therefore entails the EGR valve being kept closed during the adaptation process. However, lack of tightness in the EGR valve results in risk that a small amount of exhaust gases may bypass the closed EGR valve during the adaptation process and enter the engine together with the air flowing through the air intake, thereby leading to an incorrect calculation value and consequently poor accuracy in the adaptation of the mass flow sensor.

EP 1 793 109 A1 shows a method and a corresponding apparatus for controlling a combustion engine, where a distortion in measured data, such as data drift, is accounted for by applying a correction scheme.

US 2008/0148811 A1 shows a method for compensating a mass air flow signal produced by a mass air flow sensor in fluid communication with an air intake passageway of an internal combustion engine.

US 2008/0295489 A1 shows a method and an arrangement for monitoring the functioning of a sensor or an exhaust gas aftertreatment system.

US 2009/0126346 A1 shows method for protecting an oxidation catalyst upstream of a particulate filter for a diesel engine by limitation of injected fuel.

US 2010/0050609 A1 shows a system and method for outlet temperature control of an oxidation catalyst.

OBJECT OF THE INVENTION

The object of the present invention is to propose a novel and advantageous way of adapting a mass flow sensor which is intended to measure the mass flow of air in an air intake to a combustion engine.

SUMMARY OF THE INVENTION

According to the present invention, said object is achieved by means of a method having the features defined in claim 1.

The method according to the invention comprises the following steps:

- fuel which is injected into the engine and/or into an exhaust line downstream of the engine but does not undergo combustion is caused to accompany the exhaust gases produced by the engine to a fuel oxidation device situated in the exhaust line, in order to be oxidised in the fuel oxidation device and thereby generate an increase in the temperature of the exhaust gases passing through the fuel oxidation device,

- a temperature increase value which represents the increase in the temperature of the exhaust gases during their passage through the fuel oxidation device is determined on the basis of measured values from a temperature sensor (13) which is intended to detect the temperature of the exhaust gases upstream of the fuel oxidation device (4), and from another temperature sensor (14; 15) which is intended to detect the temperature of the exhaust gases downstream of the fuel oxidation device,

- a calculation value which represents the prevailing mass flow of air in the engine's air intake is determined on the basis of said temperature increase value, a first fuel mass flow value representing the mass flow of said injected fuel which, having undergone no combustion, accompanies the exhaust gases, and a second fuel mass flow value representing the mass flow of fuel injected into and burnt in the engine,

- said calculation value is compared with a corresponding measured value determined by means of the mass flow sensor, and

- the mass flow sensor is adapted on the basis of the result of that comparison.

As in the prior art adaptation method described above, the adaptation method according to the present invention is thus based on comparing a measured value of the mass flow of air in the engine's air intake determined by the mass flow sensor, with a corresponding calculation value, and on the mass flow sensor being adapted according to the match between the measured value and the calculation value. By allowing a known amount of unburnt fuel to accompany the exhaust gases to, and be oxidised in, a fuel oxidation device and by at the same time registering the temperature increase undergone by the exhaust gases during their passage through the fuel oxidation device it becomes possible to use known relationships between this temperature increase and the mass flows of air and fuel to determine a calculated value of the mass flow of air in the engine's air intake. The relevant calculation value can thus be determined without needing to take the engine's volumetric efficiency into account, and it becomes possible to arrive at a calculation value which is subject to less error than the corresponding calculation value arrived at by the previously known adaptation method. A further advantage of the adaptation method according to the invention is that it allows exhaust gas feedback to continue during the adaptation process, which means that any lack of tightness in the EGR valve no longer represents a source of error during the adaptation of the mass flow sensor. Continued exhaust feedback also means that the exhaust emissions during the adaptation process are not subject to the adverse effects which would occur if the feedback was interrupted during the adaptation process.

According to an embodiment of the invention, the unburnt fuel caused to accompany the exhaust gases in the engine is injected in the form of post-injections into one or more of the engine's cylinders, which post-injections take place so late during the respective power strokes that the fuel thus post-injected does not undergo combustion in the cylinder/cylinders. The injectors used for injecting fuel into the engine's cylinders are controllable with great accuracy and provide well-defined amounts of fuel injection. By using one or more of these injectors to inject during the adaptation process the fuel which, having undergone no combustion, is to accompany the exhaust gases, it is possible to arrive at a very accurate value of the mass flow of this fuel, thereby helping to improve the accuracy of the aforesaid calculation value.

Other advantageous features of the method according to the invention are indicated by the dependent claims and the description set out below.

The invention relates also to a computer program product having the features defined in claim 8 and an electronic control unit having the features defined in claim 9.

BRIEF DESCRIPTION OF THE DRAWINGS

The invention is described below in more detail on the basis of embodiment examples with reference to the attached drawings, in which:

Fig. 1     is a schematic diagram of a combustion engine with relating means for exhaust treatment,

Fig. 2     is a schematic diagram of a combustion engine with relating EGR system and means for exhaust treatment,

Fig. 3     is a schematic diagram of an electronic control unit for implementing a method according to the invention, and

Fig. 4     is a flowchart illustrating a method according to an embodiment of the invention.

DETAILED DESCRIPTION OF EMBODIMENTS OF THE INVENTION

The invention is described below as applied to a motor vehicle. The invention is nevertheless not confined to this application but may be applied in all contexts where a mass flow sensor is intended to measure the air flow in the air intake to a combustion engine and where an oxidation catalyst or some other device for oxidation of fuel is provided in the exhaust line from the engine, as in a ship or a power station.

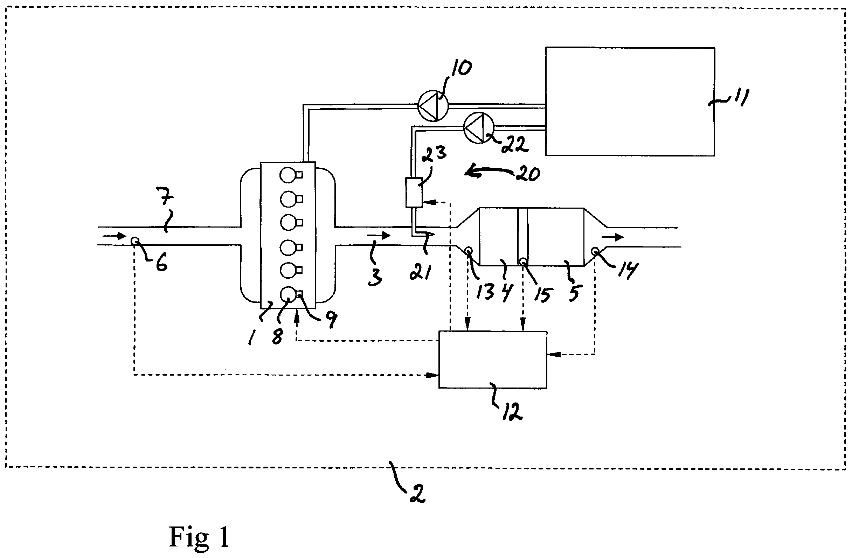

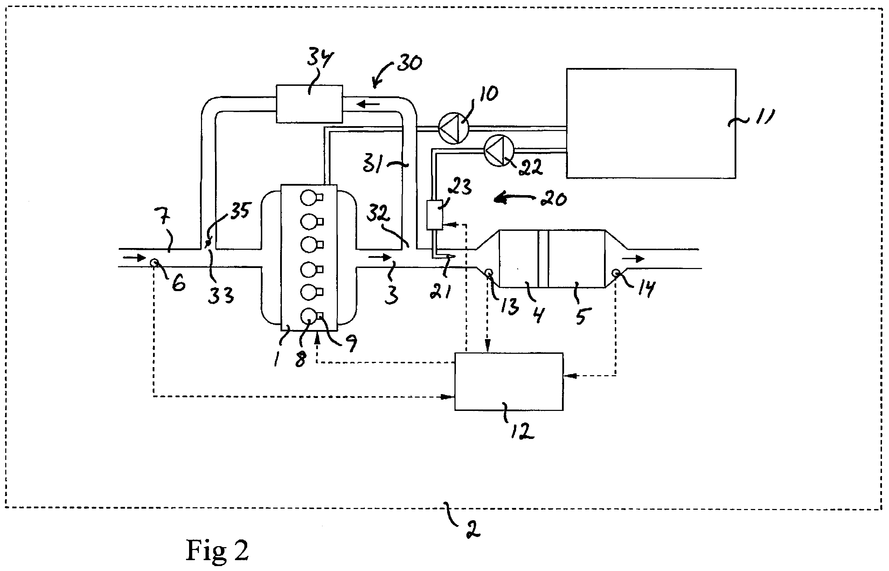

Figs. 1 and 2 depict schematically a combustion engine 1 of a motor vehicle 2. The exhaust gases leaving the engine 1 move through an exhaust line 3 and emerge into the surroundings via an exhaust outlet. In the exhaust line 3, a fuel oxidation device 4 and a particle filter 5 are disposed in series with one another, with the particle filter situated downstream of the fuel oxidation device. A mass flow sensor 6 is provided in the air intake 7 to the engine to measure the mass flow of the air which flows through the air intake 7 and thence into the engine's cylinders 8. Figs. 1 and 2 illustrate schematically an engine 1 with six cylinders, but the engine may comprise any appropriate number of cylinders. Each cylinder 8 of the engine is allocated a specific injector 9 by means of which fuel is injected into the cylinder. A pump 10 is provided to supply fuel at high pressure to the injectors 9 from a fuel tank 11. A so-called common rail (not depicted), in the form of an accumulator for accumulation of high-pressure fuel which is to be supplied to the injectors 9, is provided in a conventional way between the pump 10 and the injectors. An electronic control unit 12, a so-called engine control unit, determines the amount of fuel to be injected by the injectors 9 during each power stroke according to the vehicle's prevailing operating conditions, and regulates the opening time for each injector 9, i.e. the duration of the period of time during which the injector is kept open to inject fuel into the respective cylinder for the purposes of an individual power stroke, according to the fuel injection amount determined. The fuel injection amount is controlled inter alia according to the prevailing mass flow of air in the air intake 7, and the control unit 12 is connected to the mass flow sensor 6 in order to receive from it measured values concerning this mass flow of air.

In the embodiments illustrated in Figs. 1 and 2 and described below, the fuel oxidation device 4 takes the form of an oxidation catalyst. The fuel oxidation device 4 might alternatively take the form of a set of two or more oxidation catalysts connected in series and/or in parallel, or one or more fuel-oxidising units of some other type.

In the embodiments illustrated there is an injection point for fuel in the exhaust line 3 upstream of the oxidation catalyst 4. The injection of fuel is effected here by means of an injection device 20 comprising an injection means 21 in the form of an injection nozzle situated in the exhaust line. A pump 22 is provided to supply fuel to the injection means 21 from a fuel tank 11 of the vehicle. In the examples illustrated in Figs. 1 and 2 the injection means 21 and the engine's cylinders 8 are arranged to be supplied with the same fuel from a common fuel tank 11, but they might alternatively be arranged to be supplied with the same grade of fuel or different grades of fuel from respective fuel tanks. The supply of fuel to said injection means 21 is regulated by means of a regulating valve 23 situated between the fuel tank 11 and the injection means 21. The regulating valve 23 is controlled by an electronic control unit 12 which in the examples illustrated takes the form of the same control unit as controls the injectors 9. This control unit 12 uses the regulating valve 23 to regulate the amount of fuel injected into the exhaust gases. When the particle filter 5 needs to be regenerated, i.e. to be relieved of particles deposited in it, fuel is injected into the exhaust gases. This fuel accompanies the exhaust gases into the oxidation catalyst 4, in which the fuel is oxidised, thereby imparting to the exhaust gases such a temperature increase as to cause combustion of the particles deposited in the particle filter 5 and thus regenerate the particle filter.

In the exhaust line 3 downstream of the particle filter 5 or upstream of the injection means 21, a reduction catalyst, e.g. of SCR (selective catalytic reduction) type, might be provided to effect catalytic conversion of environmentally harmful constituents of the exhaust gases to environmentally less harmful substances.

In the example illustrated in Fig. 2, the vehicle 2 is provided with an EGR (exhaust gas recirculation) system 30 for returning part of the engine's exhaust gases from the exhaust line 3 to the air intake 7. The EGR system comprises a return line 31 with an inlet 32 situated in the exhaust line 3 upstream of the oxidation catalyst 4 and the injection means 21, and an outlet 33 situated in the air intake 7 downstream of the mass flow sensor 6. One or more EGR coolers 34 are provided in the return line 31 to cool the returned exhaust gases. The amount of exhaust gases returned is regulated by means of an EGR valve 35.

In the examples illustrated in Figs. 1 and 2, a first temperature sensor 13 is provided to measure the temperature of the exhaust gases upstream of the oxidation catalyst 4, and a second temperature sensor 14 is provided to measure the temperature of the exhaust gases downstream of the particle filter 5. In the example illustrated in Fig. 1, a third temperature sensor 15 is also provided to measure the temperature of the exhaust gases between the oxidation catalyst 4 and the particle filter 5. The control unit 12 is connected to said temperature sensors 13, 14, 15 in order to receive from them measured values concerning the prevailing exhaust temperature at the respective measuring points.

When the mass flow sensor 6 has to be adapted, unburnt fuel is caused to accompany the exhaust gases produced by the engine 1 to the oxidation catalyst 4, in order to be oxidised therein and thereby generate an increase in the temperature of the exhaust gases passing through the oxidation catalyst. According to a first alternative, this fuel is injected into the engine 1 in the form of late post-injections into one or more of the engine's cylinders 8 via the injectors 9 of the respective cylinders. These post-injections are effected so late during the respective power strokes that the fuel thus injected undergoes no combustion in the cylinder/cylinders 8 and therefore passes out from the engine 1 and accompanies the exhaust gases to the oxidation catalyst 4. According to a second alternative, this fuel is injected into the exhaust line 3 by means of the aforesaid injection device 20, i.e. via the injection means 21. According to a further alternative, part of this fuel is injected in the form of late post-injections into the engine 1, while the remainder of it is injected via the injection means 21.

The control unit 12 determines a temperature increase value $\Delta T_{BDOC-ADOC}$ which represents the increase in temperature undergone by the exhaust gases during their passage through the oxidation catalyst 4 as a result of the fuel which accompanies them into, and is oxidised in, the oxidation catalyst. This temperature increase value $\Delta T_{BDOC\text{-}ADOC}$ is thus the difference between the temperature $T_{ADOC}$ of the exhaust gases immediately after the oxidation catalyst 4 and the temperature $T_{BDOC}$ of the exhaust gases before the oxidation catalyst, i.e. $\Delta T_{BDOC\text{-}ADOC} = T_{ADOC}\text{-}T_{BDOC}$. According to a first alternative, the control unit 12 is arranged to determine the temperature increase value $\Delta T_{BDOC\text{-}ADOC}$ on the basis of measured values from the aforesaid first and third temperature sensors 13, 15. According to a second alternative, the control unit 12 is arranged to determine the temperature increase value $\Delta T_{BDOC\text{-}ADOC}$ on the basis of measured values from the aforesaid first and the second temperature sensors 13, 14. In this latter case, the control unit 12 is arranged to calculate the temperature $T_{ADOC}$ of the exhaust gases at the outlet from the oxidation catalyst 4, in a manner well-known to specialists within the field, on the basis of their temperature downstream of the particle filter 5, i.e. on the basis of measured values from said second temperature sensor 14, and thereafter to compare the temperature thus calculated with that measured by the first temperature sensor 13, in order to determine the temperature increase value $\Delta T_{BDOC\text{-}ADOC}$.

On the basis of relationships well-known to specialists within the field (see below) between the aforesaid increase in the temperature of the exhaust gases and the mass flows of air and fuel, the control unit 12 is arranged to determine a calculation value $\dot{m}_{air1}$ which represents the prevailing mass flow of air in the engine's air intake 7. The control unit 12 is arranged to compare this calculation value $\dot{m}_{air1}$ with a corresponding measured value $\dot{m}_{air2}$, determined by means of the gas flow sensor 6, concerning the prevailing mass flow of air in the engine's air intake 7, and thereafter to adapt the mass flow sensor 6 in a conventional way on the basis of the result of that comparison if it indicates that such adaptation is needed. The adaptation is done by adjustment of the signal processing algorithm which converts the sensor signal from the mass flow sensor to a mass flow value so that the current measured value from the mass flow sensor is caused to correspond better to the current calculation value. To achieve as good adaptation as possible of the mass flow sensor 6, this adaptation process should be performed in various different operating conditions with various different strong mass flows of air in the air intake 7.

There is a given relationship between the aforesaid increase in the temperature of the exhaust gases, the mass flow of the unburnt injected fuel which accompanies them to the oxidation catalyst 4, and the mass flow of the exhaust gases passing through the oxidation catalyst. This latter exhaust mass flow represents the aggregate of the mass flow of air in the air intake 7, the mass flow of the unburnt injected fuel which accompanies the exhaust gases to the oxidation catalyst 4, and the mass flow of the fuel injected via the injectors 9 and burnt in the engine's cylinders 8. From these relationships it is possible to resolve the mass flow of air in the air intake 7.

In determining said calculation value $\dot{m}_{air1}$, the control unit 12 uses said temperature increase value $\Delta T_{BDOC\text{-}ADOC}$, a first fuel mass flow value $\dot{m}_{fuel1}$ representing the mass flow of the unburnt injected fuel which accompanies the exhaust gases to the oxidation catalyst 4, and a second fuel mass flow value $\dot{m}_{fuel2}$ representing the mass flow of the fuel injected via the injectors 9 and burnt in the engine's cylinders 8. Since it controls the injection of the fuel which, having undergone no combustion, is to accompany the exhaust gases, and the injection of the fuel which is to be burnt in the engine's cylinders, the control unit 12 has access to the information needed for determining said first and second fuel mass flow values $\dot{m}_{fuel1}$, $\dot{m}_{fuel2}$.

In steady-state conditions when the temperature increase value $\Delta T_{BDOC\text{-}ADOC}$ has assumed a substantially steady value, said calculation value $\dot{m}_{air1}$ may be determined by means of the formula

$$\dot{m}_{air1} = \frac{\dot{m}_{fuel1} \cdot h_{Comb} \cdot \eta_{DOC}}{\Delta T_{BDOC-ADOC} \cdot Cp_{exh}} - \dot{m}_{fuel1} - \dot{m}_{fuel2}$$

in which

- $h_{Comb}$ is the calorific value of the unburnt fuel which accompanies the exhaust gases,
- $\eta_{DOC}$ is the efficiency of the oxidation catalyst 4 with respect to oxidation of the unburnt fuel which accompanies the exhaust gases, and
- $Cp_{exh}$ is the thermal capacity of the exhaust gases passing through the oxidation catalyst 4.

The calorific value $h_{Comb}$ depends on which fuel is used and is therefore predetermined.

The efficiency $\eta_{DOC}$ of the oxidation catalyst 4 with respect to fuel oxidation depends on the age of the oxidation catalyst, the temperature $T_{BDOC}$ of the exhaust gases before the oxidation catalyst, the temperature $T_{ADOC}$ of the exhaust gases immediately after the oxidation catalyst, and the exhaust mass flow. Values of the efficiency $n_{DOC}$ for different combinations of these variables may be determined beforehand and be stored in a memory in the form of charted values. As mentioned above, the exhaust mass flow represents the aggregate of the mass flow of air in the air intake 7, the mass flow of the unburnt injected fuel which accompanies the exhaust gases to the oxidation catalyst 4, and the mass flow of the fuel injected via injectors 9 and is burnt in the engine's cylinders 8. The fuel mass flows are known to the control unit 12 and an approximate value of the mass flow of air in the air intake 7 is obtained from the mass flow sensor 6.

The thermal capacity $Cp_{exh}$ of the exhaust gases passing through the oxidation catalyst 4 depends on their composition, which itself depends on the mass flow of air in the air intake 7, the mass flow of the unburnt injected fuel which accompanies the exhaust gases to the oxidation catalyst 4, and the mass flow of the fuel injected via the injectors 9 and burnt in the engine's cylinders 8. The fuel mass flows are known to the control unit 12 and a value of the mass flow of air in the air intake 7 is obtained from the mass flow sensor 6.

The liability to error of the measured value received from the mass flow sensor 6 entails a certain slight error in the efficiency $\eta_{DOC}$ of the oxidation catalyst and the thermal capacity $Cp_{exh}$ of the exhaust gases. This error certainly reduces the accuracy of the calculation value $\dot{m}_{air1}$ for the mass flow of air in the air intake 7 but the accuracy of the calculation value $\dot{m}_{air1}$ at will nevertheless be sufficient for it to be possible for it to effect meaningful adaptation of the mass flow sensor 6 on the basis of this calculation value $\dot{m}_{air1}$. To improve its accuracy, this calculation value $\dot{m}_{air1}$ may be determined in an iterative calculation process whereby the calculation value first arrived at by using the measured value from the mass flow sensor 6 to determine the efficiency $\eta_{DOC}$ of the oxidation catalyst and the thermal capacity $Cp_{exh}$ of the exhaust gases is used as a new value of the mass flow of air in determining the efficiency $\eta_{DOC}$ of the oxidation catalyst and the thermal capacity $Cp_{exh}$ of the exhaust gases in a repeated calculation cycle for determining the calculation value $\dot{m}_{air1}$. This may then be repeated in a suitable number of calculation cycles until a calculation value $\dot{m}_{air1}$ of desired accuracy is arrived at.

The aforesaid thermal capacity $Cp_{exh}$ has a certain temperature dependency and its value is therefore affected by the temperature of the exhaust gases. Since the temperature of the exhaust gases changes during their passage through the oxidation catalyst 4, the value used for the thermal capacity $Cp_{exh}$ in the above formula may with advantage be the mean value, or a mean value weighted in a manner known to specialists, for the thermal capacity of the exhaust gases across the relevant temperature range between $T_{BDOC}$ and $T_{ADOC}$. $T_{BDOC}$ and $T_{ADOC}$.

If the particle filter 5 downstream of the oxidation catalyst 4 is coated with catalytic material, there is an alternative way of determining the efficiency $\eta_{DOC}$ of the oxidation catalyst 4 with respect to fuel oxidation. In this case the control unit 12 may be arranged to calculate the current efficiency $\eta_{DOC}$, in a manner well-known to specialists within the field, on the basis of the temperature increase undergone by the exhaust gases during their passage through the particle filter 5, i.e. on the basis of the difference between their temperature measured by the second temperature sensor 14 downstream of the particle filter and their temperature measured by the third temperature sensor 15 upstream of the particle filter.

In non-steady-state conditions, i.e. when the temperature increase value $\Delta T_{BDOC\text{-}ADOC}$ has not assumed a steady value, it is possible to apply a calculation process substantially corresponding to that described above for steady-state conditions. In this case, however, it is necessary to compensate for the heat transfer between the exhaust gases and the oxidation catalyst 4. The simplest way to do this is by ensuring that measurements and mean value formation take place over a time which is markedly longer than the time by which the temperature of the exhaust gases and the temperature of the oxidation catalyst 4 vary. Another alternative is to supplement the above formula as follows:

$$\dot{m}_{air1} = \frac{\dot{m}_{fuel1} \cdot h_{Comb} \cdot \eta_{DOC}}{\Delta T_{BDOC-ADOC} \cdot Cp_{exh}} - \frac{k_{exh-DOC} \cdot \Delta T_{exh-DOC}}{\Delta T_{BDOC-ADOC} \cdot Cp_{exh}} - \dot{m}_{fuel1} - \dot{m}_{fuel2}$$

in which

- $k_{exh-DOC}$ is the heat transfer coefficient for the heat transfer from the exhaust gases to the oxidation catalyst 4, and
- $\Delta T_{exh-DOC}$ is the difference between

  • the mean value, or a mean value weighted in a manner known to specialists, of the exhaust temperature $T_{ADOC}$ before and the exhaust temperature $T_{ADOC}$ immediately after the oxidation catalyst 4, and
  • the temperature $T_{DOC}$ of the oxidation catalyst 4.

To be able to determine $\Delta T_{exh-DOC}$, it is necessary for the temperature $T_{DOC}$ of the oxidation catalyst 4 to be calculated either iteratively or sequentially. The heat transfer coefficient $k_{exh-DOC}$ depends on the relevant cross-sectional area for the heat transfer from the exhaust gases to the oxidation catalyst 4 and is therefore area-dependent in the examples illustrated here.

The adaptation of the mass flow sensor 6 as described above may be effected by means of the electronic control unit 12 which serves as the engine control unit for the engine 1, as illustrated in Figs. 1 and 2. However, the adaptation of the mass flow sensor 6 might alternatively be effected by means of another electronic control unit which communicates with the engine control unit.

If the fuel oxidation device comprises two or more fuel-oxidising units connected in series, e.g. two or more oxidation catalysts connected in series, the aforesaid temperature increase value $\Delta T_{BDOC\text{-}ADOC}$ represents the difference between the temperature $T_{ADOC}$ of the exhaust gases immediately after whichever of the fuel oxidising units is situated furthest downstream in the exhaust line 3 and the temperature $T_{BDOC}$ of the exhaust gases before whichever of the fuel-oxidising units is situated furthest upstream in the exhaust line 3. If the fuel oxidation device comprises two or more fuel-oxidising units connected in parallel, e.g. two or more oxidation catalysts connected in parallel, the temperature increase value $\Delta T_{BDOC\text{-}ADOC}$ represents the difference between the temperature $T_{ADOC}$ of the exhaust gases immediately downstream of a point in the exhaust line 3 where the mutually parallel exhaust manifold flows unite and the temperature $T_{BDOC}$ of the exhaust gases before whichever of the fuel-oxidising units is situated furthest upstream in the exhaust line 3.

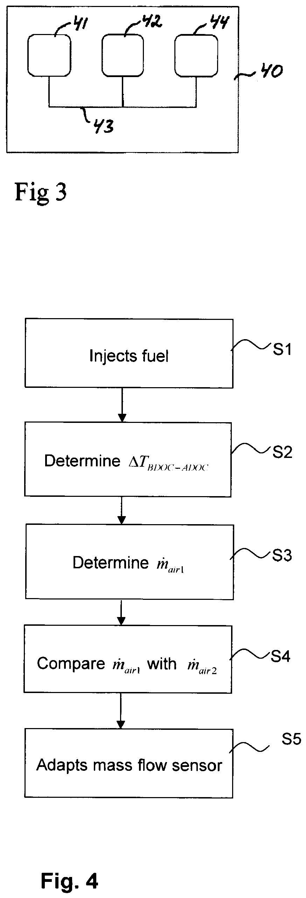

Fig. 4 is a flowchart illustrating an embodiment of a method according to the present invention for adaptation of a mass flow sensor 6 which is intended to measure the mass flow of air in an air intake 7 to a combustion engine 1. As a first step S1, fuel is injected into the engine 1 and/or into the exhaust line 3 downstream of the engine so that this fuel undergoes no combustion but is caused to accompany the exhaust gases produced by the engine to the fuel oxidation device 4 situated in the exhaust line 3, in order to be oxidised in the fuel oxidation device and thereby generate an increase in the temperature of the exhaust gases passing through the fuel oxidation device.

As a second step S2, a temperature increase value $\Delta T_{BDOC\text{-}ADOC}$ representing the increase in the temperature of the exhaust gases during their passage through the fuel oxidation device 4 is determined on the basis of measured values from a temperature sensor provided to detect the temperature of the exhaust gases upstream of the fuel oxidation device and another temperature sensor provided to detect the temperature of the exhaust gases downstream of the fuel oxidation device.

As a third step S3, a calculation value $\dot{m}_{air1}$ representing the prevailing mass flow of air in the engine's air intake 7 is determined on the basis of the temperature increase value $\Delta T_{BDOC\text{-}ADOC}$ from step S2, a first fuel mass flow value $\dot{m}_{fuel1}$ representing the mass flow of said injected fuel which, having undergone no combustion, accompanies the exhaust gases, and a second fuel mass flow value $\dot{m}_{fuel2}$ representing the mass flow of fuel injected into and burnt in the engine 1. As a fourth step S4, the calculation value $\dot{m}_{air1}$ *from* step S3 is compared with a corresponding measured value $\dot{m}_{air2}$ determined by means of the mass flow sensor 6, and as a fifth step S5 the mass flow sensor 6 is adapted on the basis of the result of the comparison at step S4.

Computer program code for implementing a method according to the invention is with advantage incorporated in a computer program which can be read into the internal memory of a computer, e.g. the internal memory of an electronic control unit of a motor vehicle. Such a computer program is with advantage provided via a computer program product comprising a data storage medium which can be read by an electronic control unit and which has the computer program stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

A computer program according to an embodiment of the invention comprises computer program code for causing an electronic control unit:

- to initiate injection of fuel into a combustion engine and/or into an exhaust line downstream of the engine in such a way that this fuel, having undergone no combustion, is caused to accompany the exhaust gases produced by the engine to a fuel oxidation device situated in the exhaust line, in order to be oxidised in the fuel oxidation device and thereby generate an increase in the temperature of the exhaust gases passing through the fuel oxidation device,
- to determine a temperature increase value $\Delta T_{BDOC\text{-}ADOC}$ which represents the increase in the temperature of the exhaust gases during their passage through the fuel oxidation device on the basis of measured values from a temperature sensor (13) which is intended to detect the temperature of the exhaust gases upstream of the fuel oxidation device (4), and from another temperature sensor (14; 15) which is intended to detect the temperature of the exhaust gases downstream of the fuel oxidation device,
- to determine a calculation value $\dot{m}_{air1}$ which represents the prevailing mass flow of air in the engine's air intake, on the basis of said temperature increase value $\Delta T_{BDOC\text{-}ADOC}$, a first fuel mass flow value $\dot{m}_{fuel1}$ representing the mass flow of said unburnt injected fuel which accompanies the exhaust gases, and a second fuel mass flow value $\dot{m}_{fuel2}$ representing the mass flow of fuel injected into and burnt in the engine,

- to compare said calculation value $\dot{m}_{air1}$ with a corresponding measured value $\dot{m}_{air2}$ determined by means of a mass flow sensor which is intended to measure the mass flow of air in the engine's air intake, and
- to adapt the mass flow sensor on the basis of the result of that comparison.

Fig. 3 illustrates very schematically an electronic control unit 40 comprising an execution means 41, e.g. a central processor unit (CPU), for execution of computer software. The execution means 41 communicates with a memory 42, e.g. of the RAM type, via a data bus 43. The control unit 40 comprises also a data storage medium 44, e.g. in the form of a flash memory or a memory of the ROM, PROM, EPROM or EEPROM type. The execution means 41 communicates with the data storage medium 44 via data bus 43. A computer program comprising computer program code for implementing a method according to the invention, e.g. in accordance with the embodiment illustrated in Fig. 4, is stored on the data storage medium 44.

**Claims**

1. A method for adaptation of a mass flow sensor (6) which is intended to measure a mass flow of air in an air intake (7) to a combustion engine (1), <u>**characterised in that**</u> the method comprises the following steps:

   - fuel which is injected into the engine (1) and/or into an exhaust line (3) downstream of the engine but does not undergo combustion is caused to accompany the exhaust gases produced by the engine to a fuel oxidation device (4) situated in the exhaust line, in order to be oxidised in the fuel oxidation device and thereby generate an increase in the temperature of the exhaust gases passing through the fuel oxidation device,
   - a temperature increase value ($\Delta T_{BDOC\text{-}ADOC}$) which represents the increase in the temperature of the exhaust gases during their passage through the fuel oxidation device (4) is determined on the basis of measured values from a temperature sensor (13) which is intended to detect the temperature of the exhaust gases upstream of the fuel oxidation device (4), and from another temperature sensor (14; 15) which is intended to detect the temperature of the exhaust gases downstream of the fuel oxidation device,
   - a calculation value ($\dot{m}_{air1}$) representing the prevailing mass flow of air in the engine's air intake (7) is determined on the basis of said temperature increase value ($\Delta T_{BDOC\text{-}ADOC}$), a first fuel mass flow value ($\dot{m}_{fuel1}$) representing the mass flow of said injected fuel which, having undergone no combustion, accompanies the exhaust gases, and a second fuel mass flow value ($\dot{m}_{fuel2}$) representing the mass flow of fuel injected into and burnt in the engine (1),
   - said calculation value ($\dot{m}_{air1}$) is compared with a corresponding measured value ($\dot{m}_{air2}$) determined by means of the mass flow sensor (6), and
   - the mass flow sensor (6) is adapted on the basis of the result of that comparison.

2. A method according to claim 1, <u>**characterised in that**</u> said calculation value ($\dot{m}_{air1}$) is determined by means of the following formula after the temperature increase value ($\Delta T_{BDOC\text{-}ADOC}$) has assumed a substantially steady value:

$$\dot{m}_{air1} = \frac{\dot{m}_{fuel1} \cdot h_{Comb} \cdot \eta_{DOC}}{\Delta T_{BDOC-ADOC} \cdot Cp_{exh}} - \dot{m}_{fuel1} - \dot{m}_{fuel2}$$

   in which

   - $\dot{m}_{air1}$ is said calculation value,
   - $\dot{m}_{fuel1}$ is the first fuel mass flow value,
   - $\dot{m}_{fuel2}$ is the second fuel mass flow value,
   - $\Delta T_{BDOC\text{-}ADOC}$ is the temperature increase value,
   - $h_{Comb}$ is the calorific value of the unburnt fuel which accompanies the exhaust gases,
   - $\eta_{DOC}$ is the efficiency of the fuel oxidation device with respect to oxidation of the unburnt fuel which accompanies the exhaust gases, and
   - $Cp_{exh}$ is the thermal capacity of the exhaust gases.

3. A method according to claim 1 or 2, <u>**characterised in that**</u> the unburnt fuel caused to accompany the exhaust gases is injected into the engine (1) in the form of post-injections into one or more of the engine's cylinders, which post-injections take place so late during the respective power stroke that the fuel thus post-injected does not undergo combustion in the cylinder/cylinders.

4. A method according to claim 1 or 2, <u>**characterised in that**</u> the unburnt fuel caused to accompany the exhaust gases is injected into the exhaust line (3) between the engine (1) and the fuel oxidation device (4) by means of an injection device (20).

5. A method according to any one of claims 1-4, <u>**characterised in that**</u> the adaptation is effected in an operating situation with substantially steady mass flow of air in the engine's air intake (7).

6. A method according to any one of claims 1-5, **characterised** **in that** the fuel oxidation device (4) takes the form of an oxidation catalyst.

7. A method according to any one of claims 1-5, **characterised** **in that** the fuel oxidation device (4) takes the form of a set of two or more oxidation catalysts connected in series and/or in parallel.

8. A computer program product, comprising a data storage medium which can be read by an electronic control unit, and which data storage medium has a computer program code stored thereon, said computer program code being arranged for causing an electronic control unit:

 - to initiate an injection of fuel into an engine and/or into an exhaust line downstream of the engine in such a way that this fuel undergoes no combustion but is caused to accompany the exhaust gases produced by the engine to a fuel oxidation device situated in the exhaust line, in order to be oxidised in the fuel oxidation device and thereby generate an increase in the temperature of the exhaust gases passing through the fuel oxidation device,
 - to determine a temperature increase value ($\Delta T_{BDOC-ADOC}$) representing the increase in the temperature of the exhaust gases during their passage through the fuel oxidation device on the basis of measured values from a temperature sensor (13) which is intended to detect the temperature of the exhaust gases upstream of the fuel oxidation device (4), and from another temperature sensor (14; 15) which is intended to detect the temperature of the exhaust gases downstream of the fuel oxidation device,
 - to determine a calculation value ($\dot{m}_{air1}$) hich represents the prevailing mass flow of air in the engine's air intake, on the basis of said temperature increase value ($\Delta T_{BDOC-ADOC}$), a first fuel mass flow value ($\dot{m}_{fuel1}$) representing the mass flow of said injected fuel which, having undergone no combustion, accompanies the exhaust gases, and a second fuel mass flow value ($\dot{m}_{fuel2}$) representing the mass flow of fuel injected into and burnt in the engine,
 - to compare said calculation value ($\dot{m}_{air1}$) with a corresponding measured value ($\dot{m}_{air2}$) determined by means of a mass flow sensor which is intended to measure the mass flow of air in the engine's air intake, and
 - to adapt the mass flow sensor on the basis of the result of that comparison.

9. An electronic control unit for a motor vehicle, comprising an execution means (41), a memory (42) connected to the execution means, and a data storage medium (44) which is connected to the execution means and which has a computer program code stored thereon, said computer program code being arranged for causing the electronic control unit:

 - to initiate an injection of fuel into an engine and/or into an exhaust line downstream of the engine in such a way that this fuel undergoes no combustion but is caused to accompany the exhaust gases produced by the engine to a fuel oxidation device situated in the exhaust line, in order to be oxidised in the fuel oxidation device and thereby generate an increase in the temperature of the exhaust gases passing through the fuel oxidation device,
 - to determine a temperature increase value ($\Delta T_{BDOC-ADOC}$) representing the increase in the temperature of the exhaust gases during their passage through the fuel oxidation device on the basis of measured values from a temperature sensor (13) which is intended to detect the temperature of the exhaust gases upstream of the fuel oxidation device (4), and from another temperature sensor (14; 15) which is intended to detect the temperature of the exhaust gases downstream of the fuel oxidation device,
 - to determine a calculation value ($\dot{m}_{air1}$) which represents the prevailing mass flow of air in the engine's air intake, on the basis of said temperature increase value ($\Delta T_{BDOC-ADOC}$), a first fuel mass flow value ($\dot{m}_{fuel1}$) representing the mass flow of said injected fuel which, having undergone no combustion, accompanies the exhaust gases, and a second fuel mass flow value ($\dot{m}_{fuel2}$) representing the mass flow of fuel injected into and burnt in the engine,
 - to compare said calculation value ($\dot{m}_{air1}$) with a corresponding measured value ($\dot{m}_{air2}$) determined by means of a mass flow sensor which is intended to measure the mass flow of air in the engine's air intake, and
 - to adapt the mass flow sensor on the basis of the result of that comparison.

**Patentansprüche**

1. Verfahren zur Anpassung eines Massenflusssensors (6), welcher dazu vorgesehen ist, einen Massenfluss von Luft in einem Lufteinlass (7) zu einem Verbrennungsmotor (1) zu messen, **dadurch gekennzeichnet, dass** das Verfahren die folgenden Verfahrensschritte umfasst:

- Kraftstoff, der in den Verbrennungsmotor (1) und/oder in eine abströmungsseitig bezüglich des Verbrennungsmotors angeordnete Abgasleitung eingespritzt wird, aber keiner Verbrennung unterliegt, wird dazu veranlasst, die von dem Verbrennungsmotor erzeugten Abgase zu einer in der Abgasleitung angeordneten Kraftstoffoxidationsvorrichtung (4) zu begleiten, um in der Kraftstoffoxidationsvorrichtung oxidiert zu werden und dadurch eine Erhöhung der Temperatur der Abgase, welche die Kraftstoffoxidationsvorrichtung durchlaufen, zu erzeugen,

- ein Temperaturerhöhungswert ($\Delta T_{BDOC-ADOC}$), der die Temperaturerhöhung der Abgase während ihres Durchgangs durch die Kraftstoffoxidationsvorrichtung (4) repräsentiert, wird anhand von Messwerten eines Temperatursensors (13), der dazu vorgesehen ist, die Temperatur der Abgase zuströmungsseitig bezüglich der Kraftstoffoxidationsvorrichtung (4) zu erfassen, und eines weiteren Temperatursensors (14; 15) ermittelt, der dazu vorgesehen ist, die Temperatur der Abgase abströmungsseitig bezüglich der Kraftstoffoxidationsvorrichtung (4) zu erfassen,

- ein Berechnungswert ($\dot{m}_{air1}$), der einen vorliegenden Massenfluss von Luft in dem Lufteinlass (7) des Verbrennungsmotors repräsentiert, wird anhand des Temperaturerhöhungswerts ($\Delta T_{BDOC-ADOC}$), eines ersten Kraftstoffmassenflusswerts ($\dot{m}_{fuel1}$), der einen Massenfluss von dem eingespritzten Kraftstoff, welcher die Abgase begleitet, wobei er keiner Verbrennung unterlegen ist, repräsentiert, und eines zweiten Kraftstoffmassenflusswerts ($\dot{m}_{fuel2}$) ermittelt, der einen Massenfluss von in den Verbrennungsmotor eingespritztem und in diesem verbrannten Kraftstoff repräsentiert,

- der Berechnungswert ($\dot{m}_{air1}$) wird mit einem entsprechenden gemessenen Wert ($\dot{m}_{air2}$), der mittels des Massenflusssensors (6) bestimmt ist, verglichen und

- der Massenflusssensor (6) wird anhand des Ergebnisses dieses Vergleichs angepasst.

2. Verfahren nach Anspruch 1, **dadurch gekennzeichnet, dass** der Berechnungswert ($\dot{m}_{air1}$) anhand der folgenden Formel ermittelt wird, nachdem der Temperaturerhöhungswert ($\Delta T_{BDOC-ADOC}$) einen zumindest im Wesentlichen stabilen Wert angenommen hat:

$$\dot{m}_{air1} = \frac{\dot{m}_{fuel1} \cdot h_{Comb} \cdot \eta_{DOC}}{\Delta T_{BDOC-ADOC} \cdot Cp_{exh}} - \dot{m}_{fuel1} - \dot{m}_{fuel2}$$

wobei

- $\dot{m}_{air1}$ der Berechnungswert ist,
- $\dot{m}_{fuel1}$ der erste Kraftstoffmassenflusswert ist,
- $\dot{m}_{fuel2}$ der zweite Kraftstoffmassenflusswert ist,
- $\Delta T_{BDOC-ADOC}$ *der* Temperaturerhöhungswert ist,
- $h_{Comb}$ der kalorische Wert des unverbrannten Kraftstoffs ist, welcher die Abgase begleitet,
- $\eta_{DOC}$ der Wirkungsgrad der Kraftstoffoxidationsvorrichtung bezüglich der Oxidation des unverbrannten Kraftstoffs ist, welcher die Abgase begleitet,
- $Cp_{exh}$ die Wärmekapazität der Abgase ist.

3. Verfahren nach Anspruch 1 oder 2, **dadurch gekennzeichnet, dass** der unverbrannte Kraftstoff, der dazu veranlasst wird, die Abgase zu begleiten, in Form von Nacheinspritzvorgängen in einen oder mehrere der Zylinder des Verbrennungsmotors (1) eingespritzt wird, wobei die Nacheinspritzvorgänge so spät während der entsprechenden Arbeitstakte stattfinden, dass der derart nacheingespritzte Kraftstoff in dem Zylinder/den Zylindern keiner Verbrennung unterliegt

4. Verfahren nach Anspruch 1 oder 2, **dadurch gekennzeichnet, dass** der unverbrannte Kraftstoff, der dazu veranlasst wird, die Abgase zu begleiten, zwischen dem Verbrennungsmotor (1) und der Treibstoffoxidationsvorrichtung (4) mittels einer Einspritzvorrichtung (20) in die Abgasleitung (3) eingespritzt wird.

5. Verfahren nach einem der Ansprüche 1 bis 4, **dadurch gekennzeichnet, dass** die Anpassung in einem Betriebszustand mit zumindest im Wesentlichen konstantem Massenfluss von Luft in dem Lufteinlass (7) des Verbrennungsmotors vorgenommen wird.

6. Verfahren nach einem der Ansprüche 1 bis 5, **dadurch gekennzeichnet, dass** die Kraftstoffoxidationsvorrichtung (4) die Gestalt eines Oxidationskatalysators annimmt.

7. Verfahren nach einem der Ansprüche 1 bis 5, **dadurch gekennzeichnet, dass** die Kraftstoffoxidationsvorrichtung (4) die Gestalt eines Satzes von zwei oder mehr Oxidationskatalysatoren annimmt, die in Serie und/oder parallel zueinander miteinander verbunden sind.

8. Computerprogrammprodukt, das ein Datenspeichermedium aufweist, welches von einer elektronischen Steuereinheit gelesen werden kann, und welches einen auf dem Datenspeichermedium gespeicherten Computerprogrammcode aufweist, wobei der Computerprogrammcode dazu eingerichtet ist, eine elektronische Steuereinheit dazu zu veranlassen:

   - eine Einspritzung von Kraftstoff in einen Verbrennungsmotor und/oder in eine abströmungsseitig bezüglich des Verbrennungsmotors angeordnete Abgasleitung derart einzuleiten, dass dieser Kraftstoff keiner Verbrennung unterliegt, aber dazu veranlasst wird, die von dem Verbrennungsmotor erzeugten Abgase zu einer in der Abgasleitung angeordneten Kraftstoffoxidationsvorrichtung zu begleiten, um in der Kraftstoffoxidationsvorrichtung oxidiert zu werden und dadurch eine Erhöhung der Temperatur der Abgase zu erzeugen, welche die Kraftstoffoxidationsvorrichtung durchlaufen,
   - einen Temperaturerhöhungswert ($\Delta T_{BDOC\text{-}ADOC}$), der die Temperaturerhöhung der Abgase während ihres Durchgangs durch die Kraftstoffoxidationsvorrichtung (4) repräsentiert, anhand von Messwerten eines Temperatursensors (13), der dazu vorgesehen ist, die Temperatur der Abgase zuströmungsseitig bezüglich der Kraftstoffoxidationsvorrichtung (4) zu erfassen, und eines weiteren Temperatursensors (14; 15) zu ermitteln, der dazu vorgesehen ist, die Temperatur der Abgase abströmungsseitig bezüglich der Kraftstoffoxidationsvorrichtung (4) zu erfassen,
   - einen Berechnungswert ($\dot{m}_{air1}$), der einen vorliegenden Massenfluss von Luft in dem Lufteinlass (7) des Verbrennungsmotors repräsentiert, anhand des Temperaturerhöhungswerts ($\Delta T_{BDOC\text{-}ADOC}$), eines ersten Kraftstoffmassenflusswerts ($\dot{m}_{fuel1}$), der einen Massenfluss von dem eingespritzten Kraftstoff repräsentiert, welcher die Abgase begleitet, wobei er keiner Verbrennung unterlegen ist, und eines zweiten Kraftstoffmassenflusswerts ($\dot{m}_{fuel2}$) zu ermitteln, der einen Massenfluss von in den Verbrennungsmotor eingespritztem und in diesem verbrannten Kraftstoff repräsentiert,
   - den Berechnungswert ($\dot{m}_{air1}$) mit einem entsprechenden gemessenen Wert ($\dot{m}_{air2}$) zu vergleichen, der mittels eines Massenflusssensors bestimmt wird, welcher dazu vorgesehen ist, den Massenfluss von Luft in dem Lufteinlass des Verbrennungsmotors zu messen, und
   - den Massenflusssensor anhand des Ergebnisses dieses Vergleichs anzupassen.

9. Elektronische Steuereinheit für ein Kraftfahrzeug, die ein Ausführungsmittel (41), einen mit dem Ausführungsmittel verbundenen Speicher (42) und ein Datenspeichermedium (44), welches mit dem Ausführungsmittel verbunden ist und welches einen auf dem Datenspeichermedium (44) gespeicherten Computerprogrammcode aufweist, wobei der Computerprogrammcode dazu eingerichtet ist, die elektronische Steuereinheit dazu zu veranlassen:

   - eine Einspritzung von Kraftstoff in einen Verbrennungsmotor und/oder in eine abströmungsseitig bezüglich des Verbrennungsmotor angeordnete Abgasleitung derart einzuleiten, dass dieser Kraftstoff keiner Verbrennung unterliegt, aber dazu veranlasst wird, die von dem Verbrennungsmotor erzeugten Abgase zu einer in der Abgasleitung angeordneten Kraftstoffoxidationsvorrichtung zu begleiten, um in der Kraftstoffoxidationsvorrichtung oxidiert zu werden und dadurch eine Erhöhung der Temperatur der Abgase zu erzeugen, welche die Kraftstoffoxidationsvorrichtung durchlaufen,
   - einen Temperaturerhöhungswert ($\Delta T_{BDOC\text{-}ADOC}$), der die Temperaturerhöhung der Abgase während ihres Durchgangs durch die Kraftstoffoxidationsvorrichtung (4) repräsentiert, anhand von Messwerten eines Temperatursensors (13), der dazu vorgesehen ist, die Temperatur der Abgase zuströmungsseitig bezüglich der Kraftstoffoxidationsvorrichtung (4) zu erfassen, und eines weiteren Temperatursensors (14; 15) zu ermitteln, der dazu vorgesehen ist, die Temperatur der Abgase abströmungsseitig bezüglich der Kraftstoffoxidationsvorrichtung (4) zu erfassen,
   - einen Berechnungswert ($\dot{m}_{air1}$), der einen vorliegenden Massenfluss von Luft in dem Lufteinlass (7) des Verbrennungsmotors repräsentiert, anhand des Temperaturerhöhungswerts ($\Delta T_{BDOC\text{-}ADOC}$), eines ersten Kraftstoffmassenflusswerts ($\dot{m}_{fuel1}$), der einen Massenfluss von dem eingespritzten Kraftstoff repräsentiert, welcher die Abgase begleitet, wobei er keiner Verbrennung unterlegen ist, und eines zweiten Kraftstoffmassenflusswerts ($\dot{m}_{fuel2}$) zu ermitteln, der einen Massenfluss von in den Verbrennungsmotor eingespritztem und in diesem verbrannten Kraftstoff repräsentiert,
   - den Berechnungswert ($\dot{m}_{air1}$) mit einem entsprechenden gemessenen Wert ($\dot{m}_{air2}$), der mittels eines Massenflusssensors bestimmt ist, welcher dazu vorgesehen ist, den Massenfluss von Luft in dem Lufteinlass des Verbrennungsmotors zu messen, zu vergleichen und

- den Massenflusssensor anhand des Ergebnisses dieses Vergleichs anzupassen.

**Revendications**

1. Procédé pour l'adaptation d'un capteur de débit massique (6), qui est destiné à mesurer un débit massique d'air dans une entrée d'air (7) d'un moteur à combustion (1), **caractérisé en ce que** le procédé comprend les étapes suivantes :

   - le carburant qui est injecté dans le moteur (1) et/ou dans une conduite d'échappement (3) en aval du moteur mais qui ne subit pas de combustion est amené à accompagner les gaz d'échappement produits par le moteur vers un dispositif (4) d'oxydation de carburant, situé dans la conduite d'échappement, dans le but d'être oxydé dans le dispositif d'oxydation de carburant et de ce fait générer une élévation de la température des gaz d'échappement traversant le dispositif d'oxydation de carburant,
   - une valeur d'élévation de la température ($\Delta T_{BDOC\text{-}ADOC}$), qui représente l'élévation de la température des gaz d'échappement pendant leur traversée du dispositif (4) d'oxydation de carburant, est déterminée sur la base de valeurs mesurées provenant d'un capteur de température (13), qui est destiné à détecter la température des gaz d'échappement en amont du dispositif (4) d'oxydation de carburant, et d'un autre capteur de température (14 ; 15), qui est destiné à détecter la température des gaz d'échappement en aval du dispositif d'oxydation de carburant,
   - une valeur de calcul ($\dot{m}_{air1}$) représentant le débit massique de l'air régnant dans l'entrée d'air (7) du moteur est déterminée sur la base de ladite valeur d'élévation de la température ($\Delta T_{BDOC\text{-}ADOC}$), d'une première valeur du débit massique de carburant ($\dot{m}_{fuel1}$) représentant le débit massique dudit carburant injecté qui, n'ayant pas subi de combustion, accompagne les gaz d'échappement, et d'une deuxième valeur du débit massique de carburant ($\dot{m}_{fuel2}$) représentant le débit massique du carburant injecté et brûlé dans le moteur (1),
   - ladite valeur de calcul ($\dot{m}_{air1}$) *est* comparée à une valeur de mesure correspondante ($\dot{m}_{air2}$) déterminée au moyen du capteur de débit massique (6), et
   - le capteur de débit massique (6) est adapté sur la base du résultat de cette comparaison.

2. Procédé selon la revendication 1, **caractérisé en ce que** ladite valeur de calcul ($\dot{m}_{air1}$) est déterminée au moyen de la formule suivante, après que la valeur d'élévation de la température ($\Delta T_{BDOC\text{-}ADOC}$) a pris une valeur sensiblement stable :

$$\dot{m}_{air1} = \frac{\dot{m}_{fuel1} \cdot h_{Comb} \cdot \eta_{DOC}}{\Delta T_{BDOC-ADOC} \cdot Cp_{exh}} - \dot{m}_{fuel1} - \dot{m}_{fuel2}$$

dans laquelle

   - $\dot{m}_{air1}$ est ladite valeur de calcul,
   - $\dot{m}_{fuel1}$ est la première valeur du débit massique de carburant,
   - $\dot{m}_{air2}$ est la deuxième valeur du débit massique de carburant,
   - $\Delta T_{BDOC\text{-}ADOC}$ est la valeur d'élévation de la température,
   - $h_{Comb}$ est le pouvoir calorifique du carburant non brûlé qui accompagne les gaz d'échappement,
   - $\eta_{DOC}$ est le rendement du dispositif d'oxydation de carburant relatif à l'oxydation du carburant non brûlé qui accompagne les gaz d'échappement, et
   - $Cp_{exh}$ est la capacité thermique des gaz d'échappement.

3. Procédé selon la revendication 1 ou 2, **caractérisé en ce que** le carburant non brûlé amené à accompagner les gaz d'échappement est injecté dans le moteur (1) sous la forme de post-injections dans un ou plusieurs des cylindres du moteur, ces post-injections se produisant suffisamment tard, au cours de la course motrice correspondante, pour que le carburant ainsi post-injecté ne subisse pas de combustion dans le cylindre/les cylindres.

4. Procédé selon la revendication 1 ou 2, **caractérisé en ce que** le carburant non brûlé amené à accompagner les gaz d'échappement est injecté dans la conduite d'échappement (3) entre le moteur (1) et le dispositif (4) d'oxydation de carburant au moyen d'un dispositif d'injection (20).

**5.** Procédé selon l'une quelconque des revendications 1 à 4, **caractérisé en ce que** l'adaptation est effectuée en cours de marche, avec un débit massique d'air sensiblement stable dans l'entrée d'air (7) du moteur.

**6.** Procédé selon l'une quelconque des revendications 1 à 5, **caractérisé en ce que** le dispositif (4) d'oxydation de carburant prend la forme d'un catalyseur d'oxydation.

**7.** Procédé selon l'une quelconque des revendications 1 à 5, **caractérisé en ce que** le dispositif (4) d'oxydation de carburant prend la forme d'un ensemble de deux catalyseurs d'oxydation, ou plus, montés en série et/ou en parallèle.

**8.** Produit de programme informatique comprenant un support de stockage de données qui peut être lu par une unité de commande électronique, et un code de programme étant stocké sur ce support de stockage de données, ledit code de programme étant arrangé pour amener l'unité de commande électronique :

- à déclencher une injection de carburant dans un moteur et/ou dans une conduite d'échappement en aval du moteur de telle sorte que ce carburant ne subisse pas de combustion mais soit amené à accompagner les gaz d'échappement produits par le moteur vers un dispositif d'oxydation de carburant situé dans la conduite d'échappement, dans le but d'être oxydé dans le dispositif d'oxydation de carburant et de ce fait de générer une élévation de la température des gaz d'échappement traversant le dispositif d'oxydation de carburant,
- à déterminer une valeur d'élévation de la température ($\Delta T_{BDOC-ADOC}$) représentant l'élévation de la température des gaz d'échappement pendant leur traversée du dispositif d'oxydation de carburant sur la base de valeurs mesurées provenant d'un capteur de température (13), qui est destiné à détecter la température des gaz d'échappement en amont du dispositif (4) d'oxydation de carburant, et d'un autre capteur de température (14 ; 15), qui est destiné à détecter la température des gaz d'échappement en aval du dispositif d'oxydation de carburant,
- à déterminer une valeur de calcul ($\dot{m}_{air1}$) qui représente le débit massique d'air régnant dans l'entrée d'air du moteur, sur la base de ladite valeur d'élévation de la température ($\Delta T_{BDOC-ADOC}$), d'une première valeur du débit massique de carburant ($\dot{m}_{fuel1}$) représentant le débit massique dudit carburant injecté qui, n'ayant pas subi de combustion, accompagne les gaz d'échappement, et d'une deuxième valeur du débit massique de carburant ($\dot{m}_{fuel2}$) représentant le débit massique de carburant injecté et brûlé dans le moteur,
- à comparer ladite valeur de calcul ($\dot{m}_{air1}$) à une valeur de mesure correspondante ($\dot{m}_{air2}$) déterminée au moyen d'un capteur de débit massique qui est destiné à mesurer le débit massique d'air dans l'entrée d'air du moteur, et
- à adapter le capteur de débit massique sur la base du résultat de cette comparaison.

**9.** Unité de commande électronique pour un véhicule à moteur, comprenant un moyen d'exécution (41), une mémoire (42) connectée au moyen d'exécution, et un support de stockage de données (44), qui est connecté au moyen d'exécution et sur lequel est stocké un code de programme informatique, ledit code de programme informatique étant arrangé de façon à amener l'unité de commande électronique :

- à déclencher une injection de carburant dans un moteur et/ou dans une conduite d'échappement en aval du moteur de telle sorte que ce carburant ne subisse pas de combustion mais soit amené à accompagner les gaz d'échappement produits par le moteur vers un dispositif d'oxydation de carburant situé dans la conduite d'échappement, dans le but d'être oxydé dans le dispositif d'oxydation de carburant et de ce fait générer une élévation de la température des gaz d'échappement traversant le dispositif d'oxydation de carburant,
- à déterminer une valeur d'élévation de la température ($\Delta T_{BDOC-ADOC}$) représentant l'élévation de la température des gaz d'échappement pendant leur traversée du dispositif d'oxydation de carburant sur la base de valeurs mesurées provenant d'un capteur de température (13), qui est destiné à détecter la température des gaz d'échappement en amont du dispositif (4) d'oxydation de carburant, et d'un autre capteur de température (14 ; 15), qui est destiné à détecter la température des gaz d'échappement en aval du dispositif d'oxydation de carburant,
- à déterminer une valeur de calcul ($\dot{m}_{air1}$) qui représente le débit massique d'air régnant dans l'entrée d'air du moteur, sur la base de ladite valeur d'élévation de la température ($\Delta T_{BDOC-ADOC}$), d'une première valeur du débit massique de carburant ($\dot{m}_{fuel1}$) représentant le débit massique dudit carburant injecté qui, n'ayant pas subi de combustion, accompagne les gaz d'échappement, et d'une deuxième valeur du débit massique de carburant ($\dot{m}_{fuel2}$) représentant le débit massique du carburant injecté et brûlé dans le moteur,
- à comparer ladite valeur de calcul ($\dot{m}_{air1}$) à une valeur de mesure correspondante ($\dot{m}_{air2}$) déterminée au moyen d'un capteur de débit massique qui est destiné à mesurer le débit massique d'air dans l'entrée d'air du moteur, et
- à adapter le capteur de débit massique sur la base du résultat de cette comparaison.

Fig 1

EP 2 550 442 B1

Fig 2

Fig 3

| | |
|---|---|
| Injects fuel | S1 |

| | |
|---|---|
| Determine $\Delta T_{BDOC-ADOC}$ | S2 |

| | |
|---|---|
| Determine $\dot{m}_{air1}$ | S3 |

| | |
|---|---|
| Compare $\dot{m}_{air1}$ with $\dot{m}_{air2}$ | S4 |

| | |
|---|---|
| Adapts mass flow sensor | S5 |

Fig. 4

## REFERENCES CITED IN THE DESCRIPTION

### Patent documents cited in the description

- EP 1793109 A1
- US 20080148811 A1
- US 20080295489 A1
- US 20090126346 A1
- US 20100050609 A1